(19) Europäisches Patentamt
European Patent Office
Office européen des brevets

(11) Veröffentlichungsnummer: **0 213 501**
**B1**

(12) # EUROPÄISCHE PATENTSCHRIFT

(45) Veröffentlichungstag der Patentschrift: **23.11.88**

(51) Int. Cl.⁴: **C 03 B 37/014**

(21) Anmeldenummer: **86111248.0**

(22) Anmeldetag: **14.08.86**

(54) **Verfahren zur Herstellung eines Aerosolstromes.**

(30) Priorität: **23.08.85 DE 3530153**

(43) Veröffentlichungstag der Anmeldung: **11.03.87 Patentblatt 87/11**

(45) Bekanntmachung des Hinweises auf die Patenterteilung: **23.11.88 Patentblatt 88/47**

(84) Benannte Vertragsstaaten: **AT BE CH DE FR GB IT LI NL SE**

(56) Entgegenhaltungen:
**EP-A-0 081 282**
**DE-A-3 037 491**
**DE-A-3 326 043**

(73) Patentinhaber: **Licentia Patent- Verwaltungs- GmbH, Theodor- Stern- Kai 1, D-6000 Frankfurt/Main 70 (DE)**

(72) Erfinder: **Kuisl, Max, Dr.rer.nat., Binsenweiherweg 9, D-7900 Ulm (DE)**

(74) Vertreter: **Schulze, Harald Rudolf, Dipl.- Ing., Licentia Patent- Verwaltungs- GmbH Theodor- Stern- Kai 1, D-6000 Frankfurt/Main 70 (DE)**

**EP 0 213 501 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1988

## Beschreibung

Die Erfindung betrifft ein Verfahren zur Herstellung eines Aerosolstromes nach dem Oberbegriff des Patentanspruchs 1.

Die Erfindung betrifft insbesondere die Herstellung eines Aerosolstromes, der glasbildende $SiO_2$-Teilchen enthält, die zur Herstellung einer Vorform für Lichtwellenleiter geeignet sind.

Aus der DE-OS-3 326 043 ist es beispielsweise bekannt, einen solchen Aerosolstrom durch eine flammenfreie chemische Reaktion aus den gas- und/oder dampfförmigen Komponenten Siliciumtetrachlorid ($SiCl_4$) und Wasser ($H_2O$) zu erzeugen gemäß der Formel

$$SiCl_4 + 2H_2O \rightarrow SiO_2 + 4\,HCl.$$

Es ist weiterhin bekannt, dabei weitere Komponenten, z. B. $GeCl_4$, zu verwenden, um eine Dotierung der entstehenden $SiO_2$-Teilchen zu erreichen. Es entsteht z. B. Germaniumdioxid gemäß der Formel

$$GeCl_4 + 2H_2O \rightarrow GeO_2 + 4\,HCl.$$

Diese chemischen Reaktionen erfolgen in einem heizbaren Reaktionsraum, der z. B. rohrförmig oder als offener Brenner ausgebildet ist. In letztere Fall ist es zweckmäßig, die reagierenden Komponenten und/oder den Brenner so vorzuheizen, daß an der Austrittsstelle der Komponenten die erforderliche Reaktionstemperatur vorhanden ist.

Diese Verfahren haben das gemeinsame Merkmal, daß die Komponenten zunächst getrennt, z. B. in konzentrisch angeordneten Rohren, einer Eintrittsstelle des Reaktionsraumes zugeführt werden, in welchem der Aerosolstrom entsteht. Insbesondere bei der Herstellung von Vorformen für Lichtwellenleiter ist es erforderlich, daß der Aerosolstrom über seiner Querschnittsfläche eine möglichst gleichmäßige Konzentration von $SiO_2$-Teilchen besitzt und außerdem als laminare Strömung ausgebildet ist.

Eine Voraussetzung für einen derart gleichmäßigen Aerosolstrom ist eine gleichmäßige laminare Gasströmung aller Komponenten sowie deren möglichst vollkommene Durchmischung. Eine laminare Strömung wird erreicht bei geringen Strömungsgeschwindigkeiten und sorgfältiger Ausbildung der Eintrittsstelle in den Reaktionsraum. Die Durchmischung erfolgt durch eine Diffusion senkrecht zur Strömungsrichtung.

Derartige Verfahren haben jedoch den Nachteil, daß die Durchmischung der Komponenten so schnell erfolgt, daß in unerwünschter Weise bereits an der Eintrittsstelle ein Reaktionsprodukt entsteht, das nun aber nicht in Form von kleinen Teilchen mit dem Aerosolstrom weitertransportiert wird, sondern sich als Festkörper an der Eintrittsstelle ablagert. Dieses führt dort zu einer mechanischen Veränderung, welche die Gleichmäßigkeit der Strömung in unvorhersehbarer Weise stört. Es ist sogar eine Verstopfung der Eintrittstelle möglich. Diese Nachteile sind vermeidbar durch eine hohe Strömungsgeschwindigkeit, die an der Eintrittsstelle für einen schnellen Abtransport der Komponenten sorgt, ehe deren Durchmischung erfolgt ist. Die hierzu erforderlichen Strömungsgeschwindigkeiten sind aber nachteiligerweise so hoch, daß die erwünschte laminare Strömung in eine unerwünschte turbulente Strömung umschlägt. Dieser Nachteil ist vermeidbar durch eine räumliche Trennung der Komponenten an der Eintrittsstelle, z. B. mit Hilfe eines inerten Gases, das zwischen die Komponenten geleitet wird. Dadurch wird die Diffusionsstrecke verlängert, so daß auch bei geringen Stömungsgeschwindigkeiten erst in einiger Entfernung von der Eintrittsstelle eine Durchmischung und Reaktion der Komponenten erfolgt. Ein solches Verfahren hat den Nachteil, daß durch das erforderliche Inertgas die Konzentration der Komponenten verringert wird, so daß letztendlich auch die Abscheidungsrate der $SiO_2$-Teilchen verringert wird. Außerdem ist der apparative Aufwand für eine derartige Anordnung insbesondere bei einer industriellen Fertigung in unwirtschaftlicher Weise sehr hoch, vor allem dann, wenn ein hoher Reinheitsgrad des entstandenen Aerosols gefordert ist.

Der Erfindung liegt daher die Aufgabe zugrunde, ein gattungsgemäßes Verfahren dahingehend zu verbessern, daß insbesondere bei einer industriellen Massenfertigung eine kostengünstige und zuverlässige Herstellung eines Aerosolstromes möglich wird, der eine hohe Teilchenkonzentration enthält und der als laminare Strömung ausgebildet ist.

Diese Aufgabe wird gelöst durch die im kennzeichnenden Teil des Patentanspruchs 1 angegebenen Merkmale. Zweckmäßige Ausgestaltungen und/oder Weiterbildungen sind den Unteransprüchen entnehmbar.

Die Erfindung wird im folgenden anhand eines Ausführungsbeispieles näher erläutert.

Zur Herstellung eines $SiO_2$-Teilchen haltigen laminaren Aerosolstromes, der zur Herstellung einer Vorform eines Lichtwellenleiters geeignet ist und der gemäß der eingangs erwähnten chemischen Reaktion entsteht, wird mindestens einer der gasförmigen Komponenten, z. B. dem gasförmigen $SiCl_4$, Chlorwasserstoff (HCl) in einer geringen Menge beigemischt, so daß ein Mischungsverhältnis von 0,1 l HCl/min zu 2 l $SiCl_4$/min entsteht. Dieses ist z. B. dadurch möglich, daß gasförmiges HCl aus einer Stahlflasche in einer genau dosierten Menge dem gasförmigen $SiCl_4$ hinzugefügt wird. Durch diese Maßnahme wird ein Abscheiden von Reaktionsprodukten der Eintrittsstelle vermieden.

Der beigemengte Chlorwasserstoff stört die erwünschte chemische Reaktion nicht, da dieser ohnehin als Reaktionsprodukt bei der Umsetzung des $SiCl_4$ entsteht.

Es ist weiterhin möglich, dem Chlorwasserstoff

einen weiteren Halogenwasserstoff, z.B. Fluorwasserstoff (HF), hinzuzufügen. Dadurch ist eine entsprechende Dotierung der $SiO_2$-Teilchen möglich.

Die Erfindung ist nicht auf das beschriebene Ausführungsbeispiel beschränkt, sondern sinngemäß auf weitere anwendbar. Beispielsweise ist es bei sogenannten Flammenhydrolyseverfahren zur Erzeugung von $SiO_2$-Teilchen zweckmäßig, mindestens einer der gasförmigen Komponenten Halogenwasserstoff zuzusetzen in einer Konzentration, daß der erforderliche Brenner nicht durch Reaktionsprodukte verkrustet wird, und/oder komplizierte Brennerkonstruktionen mit einer Trennwand aus inertem Gas zwischen den beiden Komponenten $SiCl_4$ und $O_2$ bzw. $H_2O$ vermieden werden.

**Patentansprüche**

1. Verfahren zur Herstellung eines Aerosolstromes, bei dem mindestens zwei gas- und/oder dampfförmige chemische Komponenten einem Reaktionsraum zugeführt werden, in dem aus den Komponenten ein Aerosol entsteht, das glasbildende Teilchen enthält, dadurch gekennzeichet, daß zumindest an der Eintrittsstelle der Komponenten ein gas- und/oder dampfförmiger Halogenwasserstoff zugesetzt wird in solch einer Konzentration, daß eine Ablagerung der glasbildenden Teilchen zumindest an der Eiintrittsstelle vermieden wird.

2. Verfahren zur Herstellung eines Aerosolstromes nach Anspruch 1, dadurch gekennzeichnet, daß eine der Komponenten Siliciumtetrachlorid enthält.

3. Verfahren zur Herstellung eines Aerosolstromes nach Anspruch 1 oder Anspruch 2, dadurch gekennzeichnet, daß der Halogenwasserstoff das chemische Element Chlor enthält.

4. Verfahren zur Herstellung eines Aerosolstromes nach einem der vorhergehenden Ansprüche, dadurch gekennzeichnet, daß das Aerosol durch eine flammenfreie Reaktion zumindest aus den Komponenten Siliciumtetrachlorid und Wasser erzeugt wird.

5. Verfahren zur Herstellung eines Aerosolstromes nach einem der vorhergehenden Ansprüche, dadurch gekennzeichnet daß der Aerosolstrom zur Herstellung einer Vorform für einen Lichtwellenleiter verwendet wird.

6. Verfahren zum Herstellen von $SiO_2$-Aerosol durch Flammenhydrolyse, dadurch gekennzeichnet, daß einem der Reaktionskomponenten Chlorwasserstoff zugemischt wird.

**Claims**

1. Method for the production of an aerosol jet, in which at least two gaseous and/or vapourous chemical components are conducted to a reaction space, in which an aerosol, which contains vitrifying particles, arises from the components, characterised thereby, that at least at the place of entry of the components, a gaseous and/or vapourous halogen halide is added in such a concentration that a deposit of the vitrifying particles is avoided at least at the place of entry.

2. Method for the production of an aerosol jet according to claim 1, characterised thereby, that one of the components contains silicon tetrachloride.

3. Method for the production of an aerosol jet according to claim 1 or claim 2, characterised thereby, that the halogen halide contains the chemical element chlorine.

4. Method for the production of an aerosol jet according to one of the preceding claims, characterised thereby, that the aerosol is produced from the components of silicon tetrachloride and water by a flame-free reaction.

5. Method for the production of an aerosol jet according to one of the preceding claims, characterised thereby, that the aerosol jet is employed for the production of a preform for an optical conductor.

6. Method for the production of a silicon dioxide aerosol by flame hydrolysis, characterised thereby, that hydrochloric acid is admixed to one of the reaction components.

**Revendications**

1. Procédé pour la fabrication d'un courant d'aérosol, dans lequel on envoie au moins deux composants chimiques à l'état de gaz et/ou de vapeur à une zone de réaction, dans laquelle il se forme à partir des composants un aérosol qui contient des particules formant un verre, caractérisé en ce que l'on ajoute au moins à l'endroit de l'entrée des composants un halogénure d'hydrogène à l'état de gaz et/ou de vapeur à une concentration telle que l'on évite un dépôt des particules formant un verre au moins dans l'endroit de l'entrée.

2. Procédé pour la fabrication d'un courant d'aérosol selon la revendication 1, caractérisé en ce que l'un des composants contient du tétrachlorure de silicium.

3. Procédé pour la fabrication d'un courant d'aérosol selon la revendication 1 ou 2, caractérisé en ce que l'halogénure d'hydrogène contient l'élément chimique chlore.

4. Procédé pour la fabrication d'un courant d'aérosol selon l'une des revendications précédentes, caractérisé en ce que l'aérosol est produit par une réaction sans flamme au moins à partir des composants tétrachlorure de silicium et

eau.

5. Procédé pour la fabrication d'un courant d'aérosol selon l'une des revendications précédentes, caractérisé en ce que le courant d'aérosol est utilisé pour la fabrication d'une préforme pour un guide d'ondes lumineuses.

6. Procédé pour la fabrication d'un aérosol de $SiO_2$ par hydrolyse à la flamme, caractérisé en ce que l'on mélange du chlorure d'hydrogène avec l'un des composants de réaction.